# EUROPEAN PATENT APPLICATION

(11) **EP 4 614 929 A1**
(43) Date of publication of application: **10.09.2025**
(21) Application number: 25160596.0
(22) Date of filing: 27.02.2025
(51) Int. Cl.: H04L 43/50, H04L 43/0811, H04L 45/00, H04L 45/24, H04L 45/28, H04L 41/0668, H04L 43/0852, H04L 43/10

(54) **DIAGNOSTIC SYSTEM, DIAGNOSTIC APPARATUS, AND DIAGNOSTIC METHOD IN A MULTI-PATH NETWORK**

(30) Priority: 06.03.2024 JP 2024034404
(71) Applicant: Yokogawa Electric Corporation, Tokyo 180-8750 (JP)
(72) Inventor: HAYASHI, Shunsuke, Musashino-shi, Tokyo 180-8750 (JP)
(74) Representative: Winter, Brandl - Partnerschaft mbB

(57) **Abstract**

A diagnostic system for a network includes the transmission node transmitting plural frames destined for the same reception node through the plural routes regardless of whether or not a failure has occurred in part of the plural routes the reception node performing measurement of respective arrival times of the plural frames received from the same transmission node on the basis of a timer and notifying the diagnostic apparatus of a result of the measurement and the diagnostic apparatus making, on the basis of the result of the measurement, a diagnosis of: a time period required for reconstruction of a communication route in the network upon occurrence of the failure; and performance of the network after the reconstruction.

## Description

### FIELD

The present invention relates to a diagnostic system, a diagnostic apparatus, and a diagnostic method.

### BACKGROUND

Network routes are made redundant in preparation for device breakdowns in networks. For example, according to Japanese Laid-open Patent Publication No. 2018-045399 (hereinafter, Patent Literature 1), two Ethernet switches are connected by two lines, and normally, communication is executed by use of one of these lines. When a line malfunction detection circuit of the Ethernet switches detects a malfunction in the line being used, the route is switched by the line being changed to the other one of the lines.

In a technique disclosed in Patent Literature 1, a finite time period is required for the line malfunction detection circuit to detect the malfunction, a time period is required also for the route to be switched, and information transmission is thus interrupted.

An article (hereinafter, Non-Patent Literature 1) titled, "Industrial Ethernet Rings: PROFINet MRP and MRPD" (searched on February 1, 2024 on the Internet, URL: https://www.hms-networks.com/news-and-insights/blog/posts/iot-blog/2018/06/11/industrial-ethernet-rings-profinet-mrp-and-mrpd), addresses the above described problem in Patent Literature 1. In a technique disclosed in Non-Patent Literature 1, communication routes are made redundant by routes having ring redundancy. Accordingly, in the technique disclosed in Non-Patent Literature 1, transmitting a communication frame to a destination through both routes in a ring prevents information transmission from being interrupted because even if one of the routes has a malfunction, the communication frame through the other route will arrive at the destination without delay.

The ring topology described in Non-Patent Literature 1 is difficult to be applied to a large-scale system with a large number of nodes because a propagation delay time period is generated at each node. Furthermore, topology having a mesh structure is often used in a standard Ethernet system and ring topology has less freedom in system construction.

Therefore, even in a case where topology having a mesh structure is used, a network diagnosis is desirably made so that information transmission is not interrupted.

For a network diagnosis, obtaining information from plural network switches enables checking of which route a communication frame is flowing through but requires a complicated process and is thus not practical. Furthermore, in a case where a failure occurs somewhere in the network, a route for a communication frame is reconstructed in the mesh structure and the communication frame is passed through another route, but checking whether the mesh topology actually has enough redundancy for that reconstruction and getting a grasp of a time period lost for the reconstruction and influence by congestion of communication resulting from the reconstruction are very difficult.

In one aspect, an object is to provide a diagnostic system, a diagnostic apparatus, and a diagnostic method that enable efficient execution of diagnosis of a network having a mesh structure.

### SUMMARY

According to an aspect of an embodiment, a diagnostic system for a network includes a transmission node, a reception node, and a diagnostic apparatus, the network being configured to transmit a frame from the transmission node to the reception node by use of plural routes that are independent from one another other, the diagnostic system being configured to execute processing including: the transmission node transmitting plural frames destined for the same reception node (51c, 51d) through the plural routes regardless of whether or not a failure has occurred in part of the plural routes; the reception node performing measurement of respective arrival times of the plural frames received from the same transmission node on the basis of a timer and notifying the diagnostic apparatus of a result of the measurement; and the diagnostic apparatus making, on the basis of the result of the measurement, a diagnosis of: a time period required for reconstruction of a communication route in the network upon occurrence of the failure; and performance of the network after the reconstruction.

According to an aspect of an embodiment, a diagnostic apparatus, includes a collection unit that collects, from a reception node that receives plural frames transmitted from the same transmission node, a result of measurement of arrival times, regardless of whether or not a failure has occurred in part of plural routes included in a network, the plural routes being independent from one another; and a diagnostic processing unit that makes, on the basis of the result of the measurement, a diagnosis of: a time period required for reconstruction of a communication route in the network upon occurrence of the failure; and performance of the network after the reconstruction.

According to an aspect of an embodiment, a diagnostic method for a network includes a transmission node, a reception node, and a diagnostic apparatus, the network being configured to transmit a frame from the transmission node to the reception node by use of plural routes that are independent from one another, the diagnostic method executing processing including: the transmission node transmitting plural frames destined for the same reception node through the plural routes regardless of whether or not a failure has occurred in part of the plural routes; the reception node performing measurement of respective arrival times of the plural frames received from the same transmission node on the basis of a timer and notifying the diagnostic apparatus of a result of the measurement; and the diagnostic apparatus making, on the basis of the result of the measurement, a diagnosis of: a time period required for reconstruction of a communication route in the network upon occurrence of the failure; and performance of the network after the reconstruction.

According to an embodiment, diagnosis of a network having a mesh structure is able to be executed efficiently.

### BRIEF DESCRIPTION OF THE DRAWINGS

FIG. 1 is a diagram illustrating a network having a double-tree structure;
FIG. 2 is a diagram illustrating a network having a mesh structure;
FIG. 3 is a diagram illustrating a diagnostic system according to an embodiment;
FIG. 4 is a diagram illustrating processing by a diagnostic apparatus;
FIG. 5 is a diagram illustrating an example of a data structure of a first measurement result table;
FIG. 6 is a diagram illustrating an example of a data structure of a second measurement result table;
FIG. 7 is a diagram illustrating an example of a data structure of a system vulnerability table;
FIG. 8 is a functional block diagram illustrating a configuration of the diagnostic apparatus according to the embodiment;
FIG. 9 is a flowchart illustrating a flow of processing by the diagnostic apparatus according to the embodiment;
FIG. 10 is a diagram illustrating an example of plural networks that are logically independent from one another; and
FIG. 11 is a diagram illustrating an example of a hardware configuration.

### DETAILED DESCRIPTION OF THE PREFERRED EMBODIMENTS

An embodiment of a diagnostic system, a diagnostic apparatus, and a diagnostic method disclosed by this application will hereinafter be described in detail on the basis of the drawings. The invention is not to be limited by this embodiment. Redundant description will be omitted as appropriate by assignment of the same reference sign to elements that are the same, and embodiments may be combined as appropriate so long as no contradiction arises from the combination.

### Embodiment

### Network Having Mesh Structure

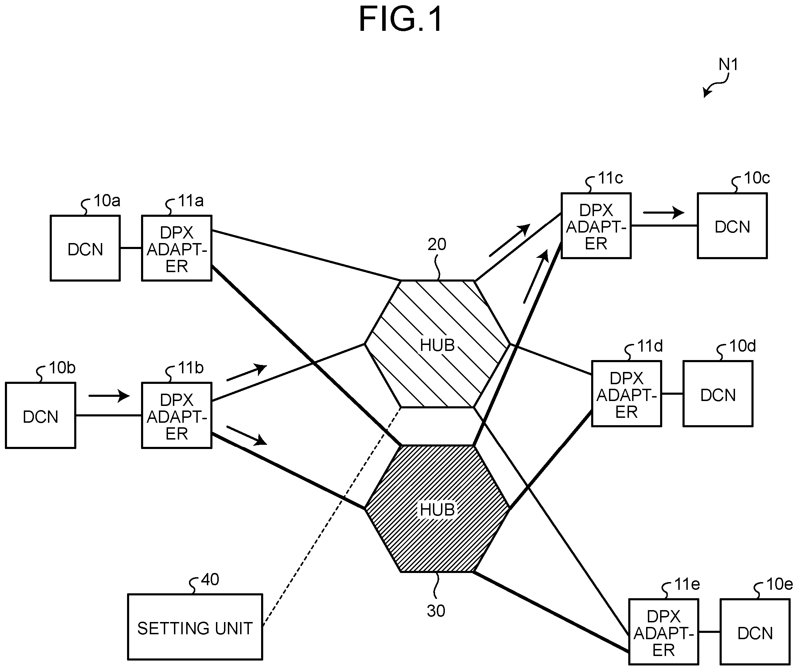

An example of a network relevant to a mesh structure will be described before description of an embodiment. FIG. 1 is a diagram illustrating a network having a double-tree structure. For example, a network N1 has: distributed compute nodes (DCNs) 10a, 10b, 10c, 10d, and 10e; DPX adapters 11a, 11b, 11c, 11d, and 11e; HUBs 20 and 30; and a setting unit 40.

The DCNs 10a to 10e are respectively connected to the DPX adapters 11a to 11e. The DPX adapters 11a to 11e are each connected to the HUBs 20 and 30. The DCNs 10a to 10e will each be generally referred to as the "DCN 10" as appropriate. The DPX adapters 11a to 11e will each be generally referred to as a "DPX adapter 11" as appropriate.

A DCN 10 outputs, data received from an input device and a control device, to a DPX adapter 11.

Upon reception of the data from the DCN 10, the DPX adapter 11 transmits communication frames through plural routes. Upon reception of the communication frames from the plural routes, a DPX adapter 11 selects any one of the communication frames and outputs data on the communication frame selected, to a DCN 10.

The HUBs 20 and 30 are network switches. The network N1 includes a communication route through the HUB 20 and a communication route through the HUB 30. The setting unit 40 has been connected to the HUB 20. The setting unit 40 performs various kinds of setup for the DCNs 10, via the HUB 20. Unlike communication between the DCNs 10, communication between the setting unit 40 and the DCNs 10 does not require high reliability. For example, in a case where the HUB 20 has a failure, the setting unit 40 can be connected to the HUB 30 instead of the HUB 20.

For example, upon reception of data from the DCN 10b, the DPX adapter 11b generates two communication frames that are identical to each other. The DPX adapter 11b transmits one of the communication frames to the DPX adapter 11c via the HUB 20 and the other communication frame to the DPX adapter 11c via the HUB 30.

Upon reception of the two communication frames through the plural routes, the DPX adapter 11c selects any one of the communication frames and outputs data on the communication frame selected, to the DCN 10c.

The network N1 described by reference to FIG. 1 has merits different from those of a ring configuration. For example, the merits include: (1) having more freedom and intuitiveness in its wiring than the ring configuration; (2) having no external disturbance upon insertion or elimination of a communication node; (3) having no risk of trouble being caused due to the ring being disconnected at two points at the same time; and (4) not requiring a ring master function needed for Media Redundancy Protocol (MRP). The case where two (double-tree) communication routes are available has been described by reference to FIG. 1, but the number of the communication routes may be n where n is a natural number equal to or larger than 3. For example, for a triple-tree structure, HUBs can be replaced one by one without reduction in its reliability.

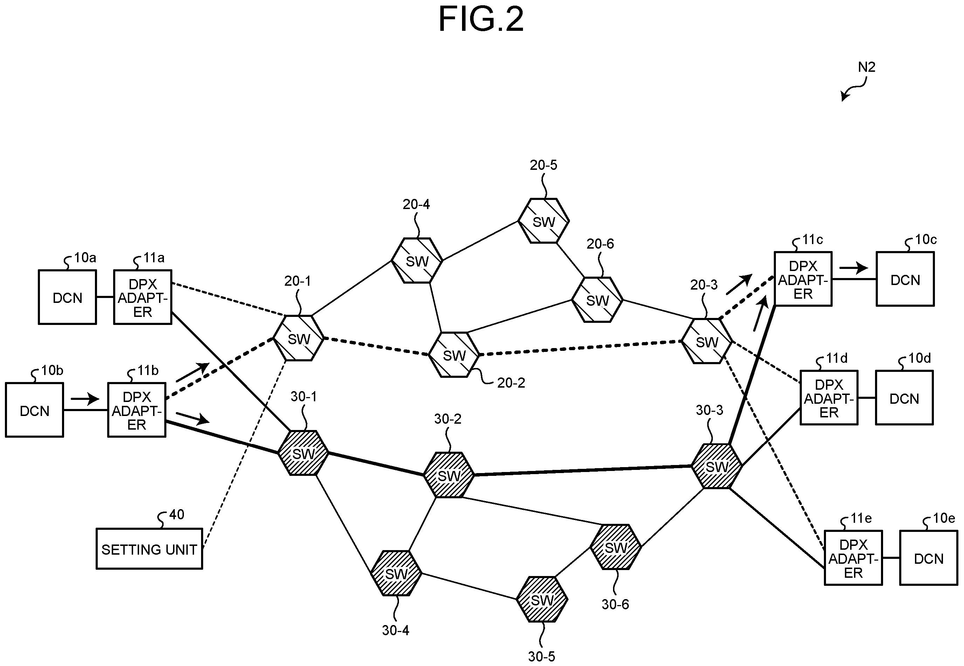

The HUBs 20 and 30 described by reference to FIG. 1, may form a network having plural network switches in a mesh-like manner, as illustrated in FIG. 2. FIG. 2 is a diagram illustrating a mesh-like network.

As illustrated in FIG. 2, , a network N2 has DCNs 10a to 10e and DPX adapters 11a to 11e. The network N2 has SWs 20-1, 20-2, 20-3, 20-4, 20-5, and 20-6. The network N2 has SWs 30-1, 30-2, 30-3, 30-4, 30-5, and 30-6.

Description related to these DCNs 10a to 10e and DPX adapters 11a to 11e is the same as the description related to the DCNs 10a to 10e and DPX adapters 11a to 11e in FIG. 1. The SWs 20-1 to 20-6 and the SWs 30-1 to 30-6 are, network switches (Ethernet switches). In FIG. 2, the SW 20-1 to SW 20-6 and the SW 30-1 to SW 30-6 are illustrated completely symmetrically to each other but are not necessarily completely symmetrical to each other. The network N2 may be configured to be an asymmetrical system using more SW 20 switches than SW 30 switches so as to transmit information via many stages.

For example, the DPX adapters 11a and 11b are each connected to the SWs 20-1 and 30-1. The DPX adapters 11c, 11d, and 11e are each connected to the SWs 20-3 and 30-3.

The SWs 20-1 to 20-6 implement data communication according to a predetermined communication protocol, to construct optimum route information beforehand. On the basis of the route information that has been constructed, the SWs 20-1 to 20-6 transmit communication frames. For example, when the SW 20-1 receives a communication frame destined for the DPX adapter 11c from the DPX adapter 11b, the communication frame arrives at the DPX adapter 11c via the SWs 20-1, 20-2, and 20-3.

In a case where a failure occurs in any of the SWs 20-1 to 20-6, route information is reconstructed.

The SWs 30-1 to 30-6 implement data communication according to a predetermined communication protocol, to construct optimum route information beforehand. On the basis of the route information constructed, the SWs 30-1 to 30-6 transmit communication frames. For example, when the SW 30-1 receives a communication frame destined for the DPX adapter 11c from the DPX adapter 11b, the communication frame arrives at the DPX adapter 11c via the SWs 30-1, 30-2, and 30-3.

In a case where a failure occurs in any of the SWs 30-1 to 30-6, route information is reconstructed.

FIG. 2 illustrates the example including the SWs 20-1 to 20-6 and SWs 30-1 to 30-6, but any other SW may be included.

The network having the double-tree structure and the network having the mesh structure have been described above.

### Diagnostic System

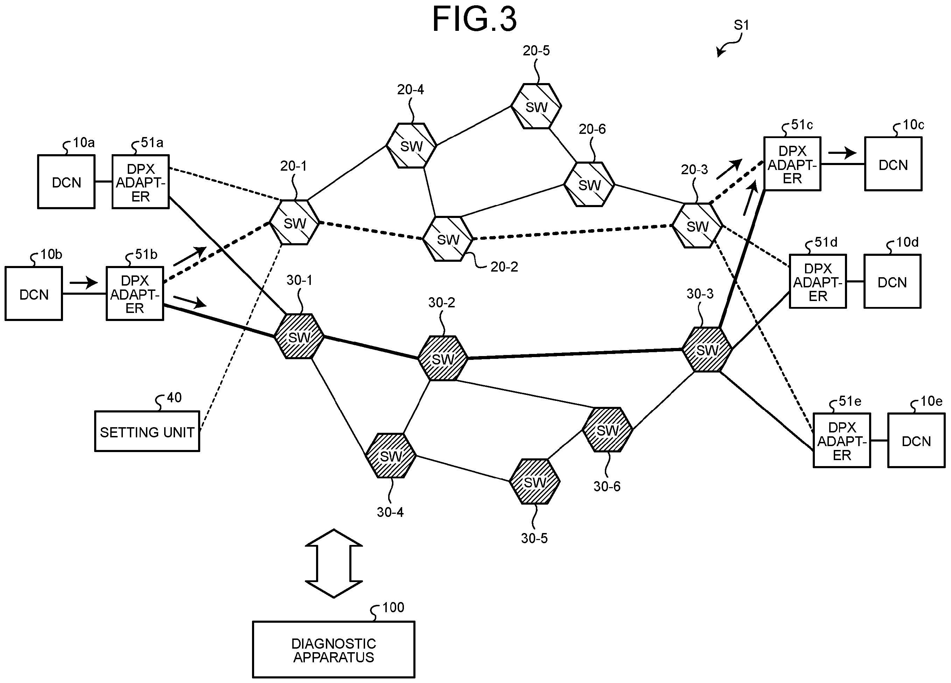

An example of a diagnostic system according to the embodiment will be described next. FIG. 3 is a diagram illustrating the diagnostic system according to the embodiment. As illustrated in FIG. 3, a diagnostic system S1 has: DCNs 10a to 10e; DPX adapters 51a, 51b, 51c, 51d, and 51e; SWs 20-1 to 20-6 and 30-1 to 30-6; and a diagnostic apparatus 100.

The DCNs 10a to 10e are respectively connected to the DPX adapters 51a to 51e. For example, the DPX adapters 51a and 51b are each connected to the SWs 20-1 and 30-1. The DPX adapters 51c, 51d, and 51e are each connected to the SWs 20-3 and 30-3. The diagnostic apparatus 100 is connected to the SWs 20 or SWs 30, or in some cases, to both the SWs 20 and the SWs 30, although illustration of their connective relations is omitted in FIG. 3.

A network constructed of the SWs 20-1 to 20-6 and a network constructed of the SW 30-1 to 30-6, which will be described by reference to FIG. 3, have been illustrated as physically independent networks. For example, a network of the diagnostic system S1 is a double-tree network. The network constructed of the SWs 20-1 to 20-6 and the network constructed of the SWs 30-1 to 30-6 may be physically independent or logically independent as long as these networks are independent from each other.

The DCNs 10a to 10e will each be generally referred to as a "DCN 10" as appropriate. The DPX adapters 51a to 51e will each be generally referred to as a "DPX adapter 51" as appropriate.

The SWs 20-1 to 20-6 implement data communication according to a predetermined communication protocol, to construct optimum route information beforehand. On the basis of the route information that has been constructed, the SWs 20-1 to 20-6 transmit communication frames. For example, when the SW 20-1 receives a communication frame destined for the DPX adapter 51c from the DPX adapter 51b, the communication frame arrives at the DPX adapter 51c via the SWs 20-1, 20-2, and 20-3.

In a case where a failure occurs in any of the SWs 20-1 to 20-6, the SWs 20-1 to 20-6 implement data communication, to reconstruct route information.

The SWs 30-1 to 30-6 implement data communication according to a predetermined communication protocol, to construct optimum route information beforehand. On the basis of the route information that has been constructed, the SWs 30-1 to 30-6 transmit communication frames. For example, when the SW 30-1 receives a communication frame destined for the DPX adapter 51c from the DPX adapter 51b, the communication frame arrives at the DPX adapter 51c via the SWs 30-1, 30-2, and 30-3.

In a case where a failure occurs in any of the SWs 30-1 to 30-6, the SWs 30-1 to 30-6 implement data communication, to reconstruct route information.

The DCNs 10 are communication nodes that require high data exchange reliability. For example, a DCN 10 outputs data received from an input device and a control device, to a DPX adapter 51.

Upon reception of data from the DCN 10, the DPX adapter 51 transmits identical communication frames through plural routes. In the example illustrated in FIG. 3, the plural routes include a route constructed of the SW 20-1 to 20-6 and a route constructed of the SWs 30-1 to 30-6. Furthermore, upon reception of the communication frames from the plural routes, a DPX adapter 51 selects any one of the communication frames and outputs data on the communication frame selected, to a DCN 10.

In the following description, a communication frame that uses the route constructed of the SWs 20-1 to 20-6 will be referred to as a "first communication frame". A communication frame that uses the route constructed of the SWs 30-1 to 30-6 will be referred to as a "second communication frame". In a case where a first communication frame and a second communication frame are not particularly distinguished from each other, the first and second communication frames will each be referred to as a communication frame.

A DPX adapter 51 has a "timer" that measures a time difference between arrivals of communication frames received from plural routes. The DPX adapter 51 discloses (transmits) a result of measurement by the timer, to the diagnostic apparatus 100.

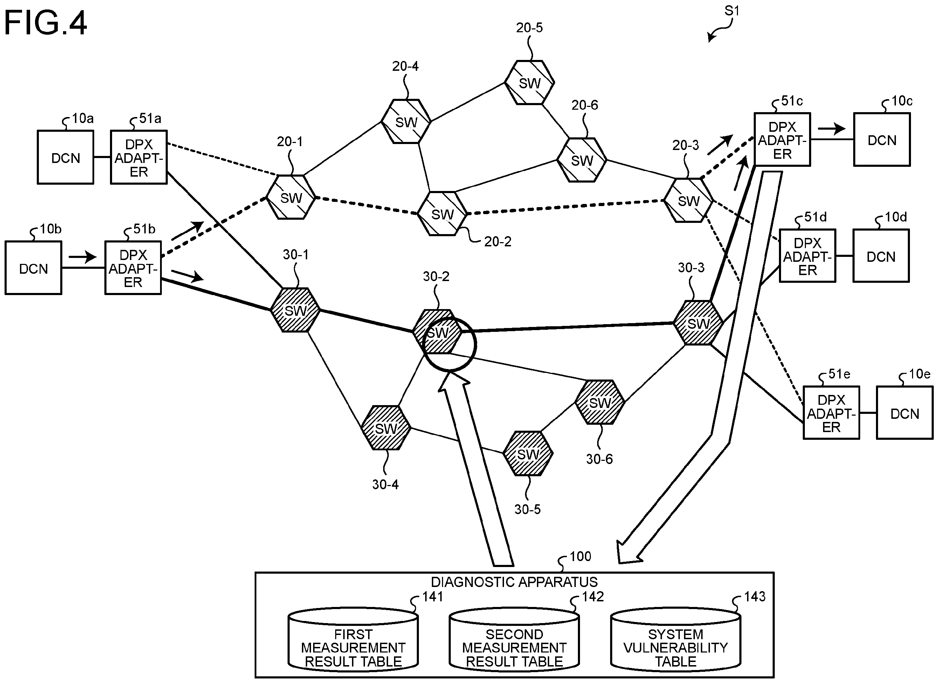

The diagnostic apparatus 100 is an apparatus that executes network diagnosis for the diagnostic system S1. FIG. 4 is a diagram illustrating processing by a diagnostic apparatus. The diagnostic apparatus 100 selects a SW where a failure is to be caused to occur artificially, from the SWs 20-1 to 20-6 and the SWs 30-1 to 30-6, and also selects a port in that SW, the port being where the failure is to be caused to occur.

FIG. 4 illustrates an example of a case where the SW 30-2 has been selected as the SW where a failure is to be caused to occur artificially. Furthermore, FIG. 4 illustrates, as an example, a case where the DPX adapter 51b transmits communication frames to the DPX adapter 51c.

For example, the diagnostic apparatus 100 executes processing of causing a failure to occur artificially, and processing of collecting arrival time difference information.

The following description is on the processing in which the diagnostic apparatus 100 causes a failure to occur artificially. For example, the diagnostic apparatus 100 transmits a control signal that causes a failure to occur artificially, to the SW 30-2. Specifically, the diagnostic apparatus 100 disables a specific port in the SW 30-2. A route between the SW 30-2 and the SW 30-3, is thereby blocked. Upon detection of route blocking, the SWs 30-1 to 30-6 reconstruct route information.

The following description is on the processing in which the diagnostic apparatus 100 collects arrival time difference information. In an example described hereinafter, the DPX adapter 51b transmits communication frames to the DPX adapter 51c, and the DPX adapter 51c discloses a measurement result to the diagnostic apparatus 100.

For example, the DPX adapter 51b transmits communication frames to the SW 20-1 and the SW 30-1. A DPX adapter 51 that transmits communication frames is an example of a "transmission node". In the following description, a DPX adapter that transmits communication frames will be referred to as a transmission node as appropriate.

The DPX adapter 51c receives a first communication frame and a second communication frame from the DPX adapter 51b, measures a time difference between a time that the first communication frame was received and a time that the second communication frame was received, and discloses a result of this measurement to the diagnostic apparatus 100. The measurement result has, set therein, in addition to information on the time difference, information identifying the transmission node that has transmitted the communication frames and the reception node (the DPX adapter 51c itself). A DPX adapter 51 that receives a communication frame is an example of a "reception node". In the following description, a DPX adapter that receives a communication frame will be referred to as a reception node as appropriate. In a case where the DPX adapter 51c does not receive one of the first communication frame and the second communication frame, the DPX adapter 51c sets a time-out in the measurement result.

Before causing an artificial failure (pseude failure) to occur, the diagnostic apparatus 100 obtains a measurement result (a pre-failure setting arrival time difference) from the DPX adapter 51c, and registers relations between the transmission node (for example, the DPX adapter 51b), the reception node (the DPX adapter 51c), and the pre-failure setting arrival time difference, in a first measurement result table 141. Similarly, every time the diagnostic apparatus 100 obtains a measurement result from another reception node, the diagnostic apparatus 100 repeatedly executes processing of registering relations between the transmission node, the reception node, and the pre-failure setting arrival time difference, in the first measurement result table 141. For example, the pre-failure setting arrival time difference corresponds to a first time difference.

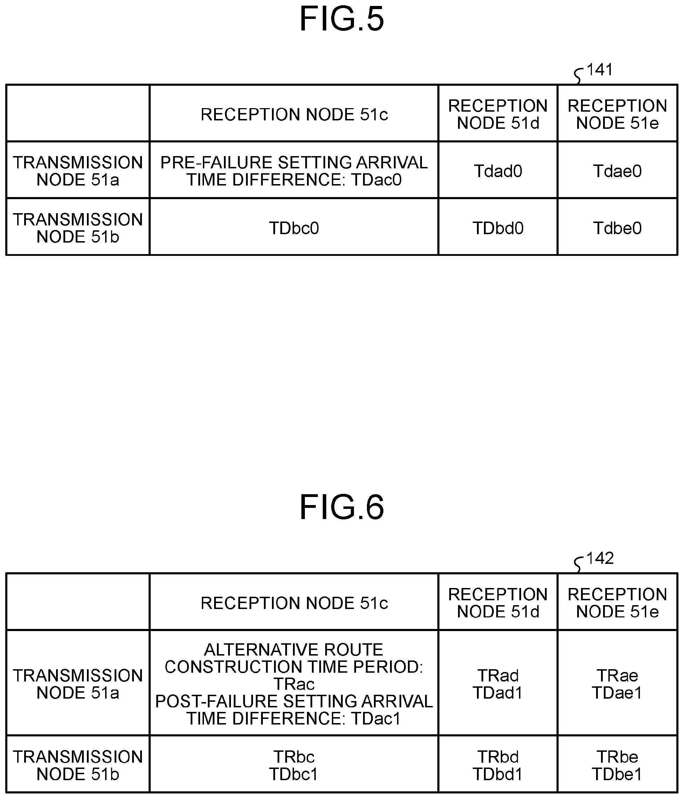

FIG. 5 is a diagram illustrating an example of a data structure of a first measurement result table. As illustrated in FIG. 5, the first measurement result table 141 has pre-failure setting arrival time differences registered in relation to pairs of transmission nodes and reception nodes. For example, FIG. 5 illustrates that the pre-failure setting arrival time difference for the pair of the transmission node 51a (the same as the DPX adapter 51a) and the reception node 51c (the same as the DPX adapter 51c) is "TDac0".

Subsequently, after causing an artificial failure to occur, the diagnostic apparatus 100 obtains a measurement result (an alternative route construction time period) from the DPX adapter 51c, and registers relations between the transmission node (for example, the DPX adapter 51b), the reception node (the DPX adapter 51c), and the alternative route construction time period, in a second measurement result table 142. Similarly, the diagnostic apparatus 100 obtains a measurement result from another reception node and repeatedly executes processing of registering relations between the transmission node, the reception node, and the alternative route construction time period, in the second measurement result table 142.

Furthermore, after the diagnostic apparatus 100 has caused the artificial failure to occur and route information has been reconstructed, the diagnostic apparatus 100 obtains a measurement result (a post-failure setting arrival time difference) from the DPX adapter 51c, and registers relations between the transmission node (for example, the DPX adapter 51b), the reception node (the DPX adapter 51c), and the post-failure setting arrival time difference, in the second measurement result table 142. Similarly, the diagnostic apparatus 100 obtains a measurement result from another reception node and repeatedly executes processing of registering relations between the transmission node, the reception node, and the post-failure setting arrival time difference, in the second measurement result table 142. For example, the post-failure setting arrival time difference corresponds to a second time difference.

FIG. 6 is a diagram illustrating an example of a data structure of a second measurement result table. As illustrated in FIG. 6, the second measurement result table 142 has post-failure setting arrival time differences and alternative route construction time periods that have been registered in relation to pairs of transmission nodes and reception nodes. For example, FIG. 6 illustrates that an alternative route construction time period is "TRac" and a post-failure setting arrival time difference is "TDac1", for the pair of the transmission node 51a (the same as the DPX adapter 51a) and the reception node 51c (the same as the DPX adapter 51c).

On the basis of the first measurement result table 141 and the second measurement result table 142, the diagnostic apparatus 100 executes diagnostic processing, and registers a diagnostic result in a system vulnerability table 143. For example, in a case where an alternative route construction time period is long (longer than a predetermined time period determined beforehand), the diagnostic apparatus 100 makes a diagnosis, concluding that "construction of an alternative route is impossible" or "the alternative route construction time period is too long", when a failure occurs in the selected SW. More specifically, in a case where a time-out has been set in a measurement result from a reception node, the diagnostic apparatus 100 makes a diagnosis concluding that construction of an alternative route is impossible, if the time-out persists, and makes a diagnosis concluding that the alternative route construction time period is too long in a case where the time-out duration is long (that is, the alternative route construction time period is long).

Furthermore, the diagnostic apparatus 100 makes a diagnosis concluding that the change in performance after the construction of the alternative route is too much in a case where the difference between the pre-failure setting arrival time difference and the post-failure setting arrival time difference is large (larger than a preset threshold). The diagnostic apparatus 100 registers the transmission node, the reception node, and the diagnostic result in the system vulnerability table 143 in association with one another. The diagnostic apparatus 100 thereafter undoes the artificial failure.

The diagnostic apparatus 100 repeatedly executes the above described processing by changing the SW and port where an artificial failure occurs.

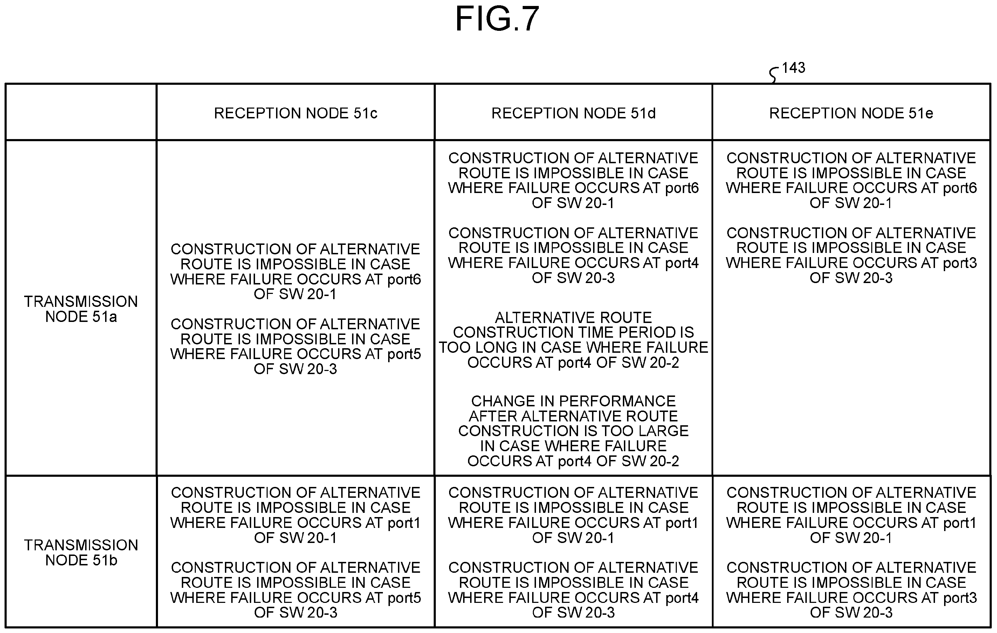

FIG. 7 is a diagram illustrating an example of a data structure of a system vulnerability table. As illustrated in FIG. 7, the system vulnerability table 143 has, comprehensively set therein, diagnostic results in cases where failures are caused to occur artificially at the respective SWs. For example, FIG. 7 illustrates that a diagnosis has been made, the diagnosis concluding that the alternative route construction time period is too long for the pair of the transmission node 51a (the same as the DPX adapter 51a) and the reception node 51d (the same as the DPX adapter 51d) in a case where a failure occurs in the SW 20-2 (Port 4). Furthermore, FIG. 7 illustrates that a diagnosis has been made, the diagnosis concluding that the change in the performance after construction of an alternative route is too much for the pair of the transmission node 51a (the same as the DPX adapter 51a) and the reception node 51d (the same as the DPX adapter 51d) in the case where a failure occurs in the SW 20-2 (Port 4).

### Functional Configuration of Diagnostic Apparatus 100

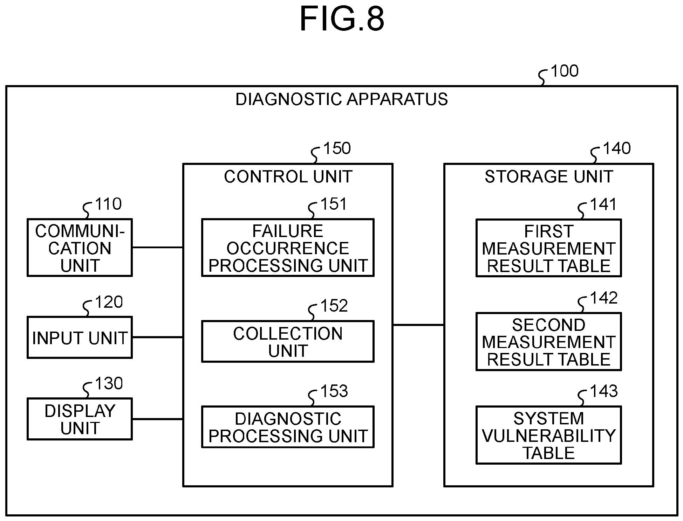

An example of a configuration of the diagnostic apparatus 100 according to the embodiment will be described next. FIG. 8 is a functional block diagram illustrating a configuration of the diagnostic apparatus according to the embodiment. As illustrated in FIG. 8, the diagnostic apparatus 100 has a communication unit 110, an input unit 120, a display unit 130, a storage unit 140, and a control unit 150. Functional units that the diagnostic apparatus 100 has are not limited to those illustrated in FIG. 8 and the diagnostic apparatus 100 may have any other functional unit. The diagnostic apparatus 100 may be implemented by plural server computers.

The communication unit 110 executes data communication with the DPX adapters 51a to 51e and the SWs 20-1 to 20-6 and 30-1 to 30-6.

The input unit 120 inputs various kinds of information to the control unit 150 of the diagnostic apparatus 100. The input unit 120 is a keyboard, a mouse, and a touch panel.

The display unit 130 displays information output from the control unit 150 of the diagnostic apparatus 100.

The storage unit 140 stores the first measurement result table 141, the second measurement result table 142, and the system vulnerability table 143. The storage unit 140 is implemented by a memory and a hard disk.

Description related to the first measurement result table 141, the second measurement result table 142, and the system vulnerability table 143 is the same as the description with respect to FIG. 5 and FIG. 6.

The control unit 150 is a processing unit that governs the whole diagnostic apparatus 100, and is implemented by a processor. This control unit 150 has a failure occurrence processing unit 151, a collection unit 152, and a diagnostic processing unit 153.

The failure occurrence processing unit 151 selects a SW (and a port) where a failure is to be caused to occur artificially, and transmits a control signal that causes a failure to occur artificially, to the selected SW After a diagnosis related to the SW where the failure has been caused to occur artificially is completed, the failure occurrence processing unit 151 undoes the artificial failure at the SW and changes the SW where a failure is to be caused to occur artificially.

The failure occurrence processing unit 151 may randomly select a SW where a failure is to be caused to occur artificially or may select the SW according to degrees of priority. For example, the degrees of priority of the SWs have been set beforehand.

Other processing executed by the failure occurrence processing unit 151 is the same as the processing, in which an artificial failure occurs and which has been described by reference to FIG. 4.

Before an artificial failure occurs in a SW, the collection unit 152 obtains a measurement result (a pre-failure setting arrival time difference) from each reception node, and registers relations between the transmission nodes, the reception nodes, and the pre-failure setting arrival time differences, in the first measurement result table 141.

After an artificial failure has occurred at a SW, the collection unit 152 obtains a measurement result (an alternative route construction time period) from each reception node and registers relations between the transmission nodes, the reception nodes, and the alternative route construction time periods, in the second measurement result table 142.

After an artificial failure has been caused to occur and route information has been reconstructed, the collection unit 152 obtains a measurement result (a post-failure setting arrival time difference) from each reception node, and further registers relations between the transmission nodes, the reception nodes, and the post-failure setting arrival time differences, in the second measurement result table 142.

On the basis of the first measurement result table 141 and the second measurement result table 142, the diagnostic processing unit 153 executes diagnostic processing, and registers diagnostic results in the system vulnerability table 143.

For example, the diagnostic processing unit 153 selects a pair of a transmission node and a reception node, and in a case where the alternative route construction time period is long (longer than a predetermined time period that has been determined beforehand), the diagnostic processing unit 153 makes, for the pair selected, a diagnosis concluding that construction of an alternative route is impossible or a time period required is too long if a failure occurs at the relevant SW (and port). For example, in a case where a time-out has been set in a measurement result, the diagnostic processing unit 153 makes a diagnosis concluding that construction of an alternative route is impossible and in a case where the alternative route construction time period is long, the diagnostic processing unit 153 makes a diagnosis concluding that the alternative route construction time period is too long.

The diagnostic processing unit 153 makes a diagnosis concluding that change in performance after construction of an alternative route is too much in a case where a difference between a pre-failure setting arrival time difference and a post-failure setting arrival time difference is large (larger than a preset threshold).

The collection unit 152 and the diagnostic processing unit 153 repeatedly execute the above described processing every time the SW (and port) where an artificial failure occurs is changed. The diagnostic processing unit 153 may output the diagnostic results registered in the system vulnerability table 143 to the display unit 130 and cause the display unit 130 to display the diagnostic results.

### Flow of Processing

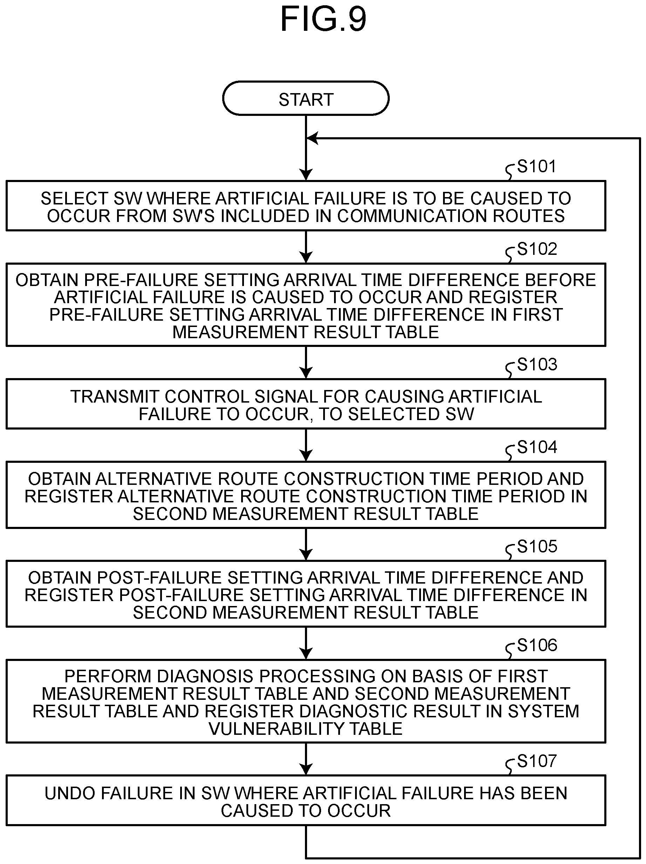

A flow of processing by the diagnostic apparatus 100 according to the embodiment will be described next. FIG. 9 is a flowchart illustrating a flow of processing by the diagnostic apparatus according to the embodiment. As illustrated in FIG. 9, the failure occurrence processing unit 151 of the diagnostic apparatus 100 selects a SW where an artificial failure is to be caused to occur, from the SWs included in the communication routes (Step S101).

The collection unit 152 of the diagnostic apparatus 100 obtains a pre-failure setting arrival time difference before the artificial failure is caused to occur and registers the pre-failure setting arrival time difference in the first measurement result table 141 (Step S102). The failure occurrence processing unit 151 of the diagnostic apparatus 100 transmits a control signal for causing the artificial failure to occur, to the selected SW (Step S103).

The collection unit 152 obtains an alternative route construction time period and registers the alternative route construction time period in the second measurement result table 142 (Step S104). The collection unit 152 obtains a post-failure setting arrival time difference and registers the post-failure setting arrival time difference in the second measurement result table 142 (Step S105).

On the basis of the first measurement result table 141 and the second measurement result table 142, the diagnostic processing unit 153 executes diagnostic processing and registers a diagnostic result in the system vulnerability table 143 (Step S106). The diagnostic processing executed by the diagnostic processing unit 153 at Step S106 is the same as that described above.

The failure occurrence processing unit 151 undoes the failure at the SW where the artificial failure has been caused to occur (Step S107) and proceeds to Step S101.

### Effects

Effects of the diagnostic system S1 according to the embodiment will be described next. In the diagnostic system S1, a transmission node transmits plural communication frames destined for the same reception node through plural routes after an artificial failure has occurred in part of the plural routes. The reception node performs measurement of arrival times of the plural frames received from the same transmission node on the basis of a timer and notifies the diagnostic apparatus 100 of a result of this measurement. On the basis of the result of the measurement, the diagnostic apparatus 100 makes a diagnosis of: a time period required for reconstruction of a communication route in the network upon occurrence of the artificial failure; and performance of the network after the reconstruction. Diagnosis of a network having a mesh structure is thereby able to be executed efficiently.

Furthermore, in the diagnostic system S1, the diagnostic apparatus 100 further executes processing of selecting part of nodes included in the plural routes and causing an artificial failure to occur at the selected part of the nodes (SW). Influence of a failure that occurs at each node is thereby able to be diagnosed easily.

Furthermore, the reception node in the diagnostic system S1 notifies the diagnostic apparatus 100 of an alternative route construction time period that is a time period, over which part of the plural frames from the same transmission node does not arrive after the artificial failure occurs in the part of the plural routes. The diagnostic apparatus 100 makes a diagnosis of the alternative route construction time period that is a time period required for reconstruction of a communication route in the network upon occurrence of the artificial failure. A time period from the occurrence of the failure to the reconstruction of the communication route is thereby able to be determined easily.

Before the artificial failure occurs in the part of the plural routes, the reception node notifies the diagnostic apparatus 100 of a pre-failure setting arrival time difference that is a difference between arrival times of the plural frames received from the same transmission node, and notifies the diagnostic apparatus 100 of a post-failure setting arrival time difference that is a difference between arrival times of plural frames received from the same transmission node, after the artificial failure has occurred in the part of the plural routes and route information has been reconstructed. On the basis of the pre-failure setting arrival time difference and the post-failure setting arrival time difference, the diagnostic apparatus 100 makes a diagnosis of a difference between a time period for arrival of a frame in the network before the reconstruction and a time period for arrival of a frame in the network after the reconstruction. Performance after the reconstruction of the communication route is thereby able to be determined, the reconstruction resulting from the occurrence of the failure.

Furthermore, in the diagnostic system S1, in a case where the reception node has not received the frame from part of the plural routes, the reception node notifies the diagnostic apparatus 100 of information indicating that the frame has not been received from the part of the plural routes. The route that is no longer able to be used by the occurrence of the failure is thereby able to be identified. Setting of an artificial failure is comprehensively performed for the whole network system. According to the description thus far, this setting of an artificial failure is performed for one point at a time and after setting for one point is undone, setting for the next point is performed. However, multiple failures may be simulated. That is, the setting may be done simultaneously for more than one point. However, if failures are set simultaneously over two independent networks (in a case where there are two independent systems), transmission of a signal from a transmission node to a reception node may not be performed, and simultaneous setting for such plural points is thus to be avoided.

### Other Network Configuration

The network constructed of the SWs 20-1 to 20-6 and the network constructed of the SWs 30-1 to 30-6 have been described as physically independent networks by reference to the example in FIG. 3 but as long as the network constructed of the SWs 20-1 to 20-6 and the network constructed of the SWs 30-1 to 30-6 are independent from each other, these networks may be physically independent from each other or logically independent from each other. The diagnostic system S1 also performs transmission and reception of frames that do not meet the condition of being addressed to the same receiving node.

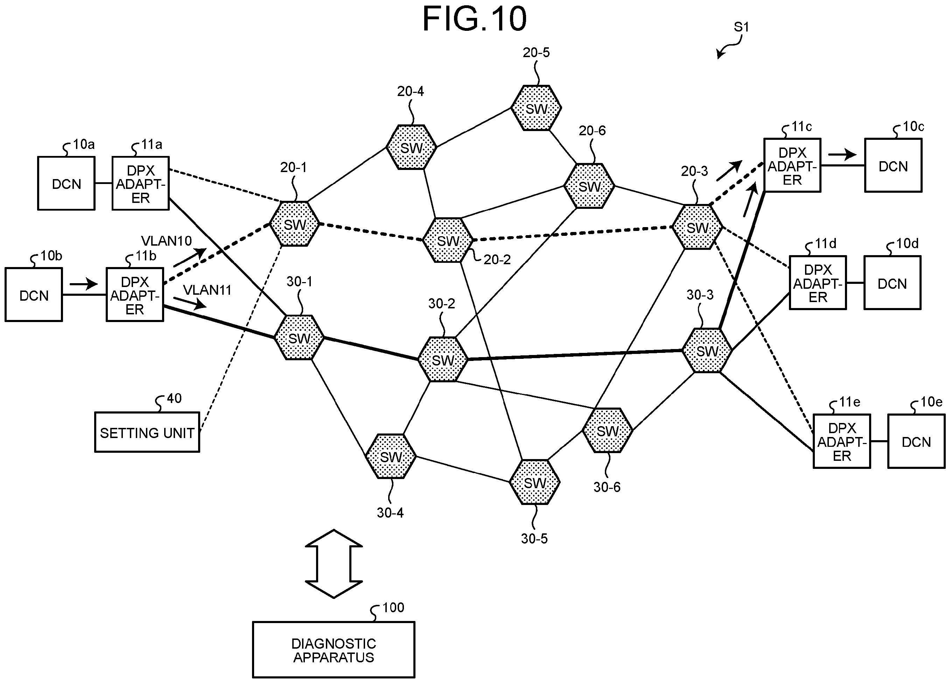

FIG. 10 is a diagram illustrating an example of plural networks that are logically independent from each other. In a network illustrated in FIG. 8, the plural networks logically independent from each other are configured by use of the virtual LAN (VLAN) technology. For example, in one VLAN, a DPX adapter 11b and a SW 20-1 are connected to each other and in another VLAN, a DPX adapter 11b and a SW 30-1 are connected to each other. Furthermore, in the one VLAN, a DPX adapter 11c and a SW 20-3 are connected to each other and in the other VLAN, a DPX adapter 11c and a SW 30-3 are connected to each other. Using Multiple Spanning Tree Protocol (MSTP) prescribed by IEC/IEEE 60802 and network switches supporting MSTP enables implementation of the topology described by reference to FIG. 10.

### Hardware

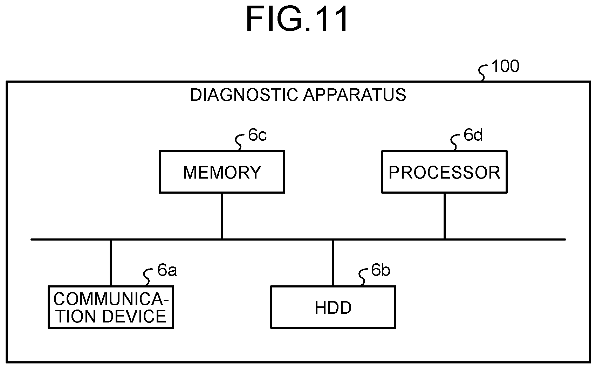

An example of a hardware configuration of the diagnostic apparatus 100 will be described next. FIG. 11 is a diagram illustrating the example of the hardware configuration. As illustrated in FIG. 11, the diagnostic apparatus 100 has a communication device 6a, a hard disk drive (HDD) 6b, a memory 6c, and a processor 6d. These units illustrated in FIG. 11 are connected to one another via a bus.

The communication device 6a implements communication with the DPX adapters 11, the SWs 20-1 to 20-6, and the SWs 30-1 to 30-6, of the diagnostic system S1. The HDD 6b stores a DB and a program that causes the functions illustrated in FIG. 8 to operate.

The processor 6d operates processes that perform the functions described in fig.8 by reading programs from the HDD 6b or similar storage devices and deploying them to the memory 6c, thereby executing the same processing as each processing unit shown in fig.8. For example, this processing executes the same functions as the processing units that the diagnostic apparatus 100 has. Specifically, the processor 6d executes a process that executes the same processing as the failure occurrence processing unit 151, the collection unit 152, and the diagnostic processing unit 153.

As described above, the diagnostic apparatus 100 operates as a diagnostic apparatus that executes an information provision method by reading and executing the program. Furthermore, the diagnostic apparatus 100 may implement the same functions as those according to the above described embodiment by reading the program from a recording medium by means of a medium reading device and executing the program read. The program referred to herein is not limited to being executed by the diagnostic apparatus 100. For example, the present invention may also be similarly applied to a case where another computer or a server executes the program, or a case where another computer and a server execute the program in corporation with each other.

The program may be distributed via a network, such as the Internet. Furthermore, the program may be executed by being recorded in a computer-readable recording medium, such as a hard disk, a flexible disk (FD), a CD-ROM, a magneto-optical (MO) disk, or a digital versatile disc (DVD), and being read from the recording medium by a computer.

### Others

The following are some examples of a combination of technical features disclosed herein.
(1) A diagnostic system for a network comprising a transmission node, a reception node, and a diagnostic apparatus, the network being configured to transmit a frame from the transmission node to the reception node by use of plural routes that are independent from one another other, the diagnostic system being configured to execute processing including:
   the transmission node transmitting plural frames destined for the same reception node through the plural routes regardless of whether or not a failure has occurred in part of the plural routes;
   the reception node performing measurement of respective arrival times of the plural frames received from the same transmission node on the basis of a timer and notifying the diagnostic apparatus of a result of the measurement; and
   the diagnostic apparatus making, on the basis of the result of the measurement, a diagnosis of: a time period required for reconstruction of a communication route in the network upon occurrence of the failure; and performance of the network after the reconstruction.
(2) The diagnostic system according to (1), wherein the diagnostic apparatus further executes processing of selecting part of nodes included in the plural routes and causing a pseudo failure to occur at the selected part of the nodes.
(3) The diagnostic system according to (1) or (2), wherein the reception node notifies the diagnostic apparatus of a time period over which part of the plural frames from the same transmission node does not arrive at the reception node, after the pseudo failure has occurred in part of the plural routes.
(4) The diagnostic system according to (3), wherein the diagnostic apparatus makes a diagnosis of a time period required for reconstruction of a communication route in the network upon occurrence of the pseudo failure.
(5) The diagnostic system according to any one of (1) to (4), wherein the reception node further executes processing of notifying the diagnostic apparatus of information in a case where the reception node has not received the frame from part of the plural routes, the information indicating that the reception node has not received the frame from the part of the plural routes.
(6) The diagnostic system according to (3), wherein the reception node notifies the diagnostic apparatus of a first time difference that is a difference between arrival times of plural frames received from the same transmission node before occurrence of a pseudo failure in part of the plural routes, and notifies the diagnostic apparatus of a second time difference that is a difference between arrival times of plural frames received from the same transmission node after the occurrence of the pseudo failure in the part of the plural routes and reconstruction of route information.
(7) The diagnostic system according to (6), wherein the diagnostic apparatus makes a diagnosis of a difference between a time period for arrival of a frame in the network before the reconstruction and a time period for arrival of a frame in the network after the reconstruction, on the basis of the first time difference and the second time difference.
(8) A diagnostic apparatus, comprising:
   a collection unit that collects, from a reception node that receives plural frames transmitted from the same transmission node, a result of measurement of arrival times, regardless of whether or not a failure has occurred in part of plural routes included in a network, the plural routes being independent from one another; and
   a diagnostic processing unit that makes, on the basis of the result of the measurement, a diagnosis of: a time period required for reconstruction of a communication route in the network upon occurrence of the failure; and performance of the network after the reconstruction.
(9) A diagnostic method for a network comprising a transmission node, a reception node, and a diagnostic apparatus, the network being configured to transmit a frame from the transmission node to the reception node by use of plural routes that are independent from one another, the diagnostic method executing processing including:
   the transmission node transmitting plural frames destined for the same reception node through the plural routes regardless of whether or not a failure has occurred in part of the plural routes;
   the reception node performing measurement of respective arrival times of the plural frames received from the same transmission node on the basis of a timer and notifying the diagnostic apparatus of a result of the measurement; and
   the diagnostic apparatus making, on the basis of the result of the measurement, a diagnosis of: a time period required for reconstruction of a communication route in the network upon occurrence of the failure; and performance of the network after the reconstruction.

## Claims

1. A diagnostic system (S1) for a network comprising a transmission node (51a, 51b), a reception node (51c, 51d), and a diagnostic apparatus (100), the network being configured to transmit a frame from the transmission node (51a, 51b) to the reception node (51c, 51d) by use of plural routes that are independent from one another other, the diagnostic system being configured to execute processing including:
the transmission node (51a, 51b) transmitting plural frames destined for the same reception node (51c, 51d) through the plural routes regardless of whether or not a failure has occurred in part of the plural routes;
the reception node (51c, 51d) performing measurement of respective arrival times of the plural frames received from the same transmission node (51a, 51b) on the basis of a timer and notifying the diagnostic apparatus of a result of the measurement; and
the diagnostic apparatus making, on the basis of the result of the measurement, a diagnosis of: a time period required for reconstruction of a communication route in the network upon occurrence of the failure; and performance of the network after the reconstruction.

2. The diagnostic system according to claim 1, wherein the diagnostic apparatus further executes processing of selecting part of nodes included in the plural routes and causing a pseudo failure to occur at the selected part of the nodes.

3. The diagnostic system according to claim 2, wherein the reception node (51c, 51d) notifies the diagnostic apparatus of a time period over which part of the plural frames from the same transmission node (51a, 51b) does not arrive at the reception node (51c, 51d), after the pseudo failure has occurred in part of the plural routes.

4. The diagnostic system according to claim 3, wherein the diagnostic apparatus makes a diagnosis of a time period required for reconstruction of a communication route in the network upon occurrence of the pseudo failure.

5. The diagnostic system according to any one of claim 1 to 4, wherein the reception node (51c, 51d) further executes processing of notifying the diagnostic apparatus of information in a case where the reception node (51c, 51d) has not received the frame from part of the plural routes, the information indicating that the reception node (51c, 51d) has not received the frame from the part of the plural routes.

6. The diagnostic system according to claim 3, wherein the reception node (51c, 51d) notifies the diagnostic apparatus of a first time difference that is a difference between arrival times of plural frames received from the same transmission node (51a, 51b) before occurrence of a pseudo failure in part of the plural routes, and notifies the diagnostic apparatus of a second time difference that is a difference between arrival times of plural frames received from the same transmission node (51a, 51b) after the occurrence of the pseudo failure in the part of the plural routes and reconstruction of route information.

7. The diagnostic system according to claim 6, wherein the diagnostic apparatus makes a diagnosis of a difference between a time period for arrival of a frame in the network before the reconstruction and a time period for arrival of a frame in the network after the reconstruction, on the basis of the first time difference and the second time difference.

8. A diagnostic apparatus, comprising:
a collection unit (152) that collects, from a reception node (51c, 51d) that receives plural frames transmitted from the same transmission node (51a, 51b), a result of measurement of arrival times, regardless of whether or not a failure has occurred in part of plural routes included in a network, the plural routes being independent from one another; and
a diagnostic processing unit (153) that makes, on the basis of the result of the measurement, a diagnosis of: a time period required for reconstruction of a communication route in the network upon occurrence of the failure; and performance of the network after the reconstruction.

9. A diagnostic method for a network comprising a transmission node (51a, 51b), a reception node (51c, 51d), and a diagnostic apparatus, the network being configured to transmit a frame from the transmission node (51a, 51b) to the reception node (51c, 51d) by use of plural routes that are independent from one another, the diagnostic method executing processing including:
the transmission node (51a, 51b) transmitting plural frames destined for the same reception node (51c, 51d) through the plural routes regardless of whether or not a failure has occurred in part of the plural routes;
the reception node (51c, 51d) performing measurement of respective arrival times of the plural frames received from the same transmission node (51a, 51b) on the basis of a timer and notifying the diagnostic apparatus of a result of the measurement; and
the diagnostic apparatus making, on the basis of the result of the measurement, a diagnosis of: a time period required for reconstruction of a communication route in the network upon occurrence of the failure; and performance of the network after the reconstruction.
